# EUROPÄISCHE PATENTSCHRIFT

(11) **EP 3 112 626 B1**
(45) Veröffentlichungstag und Bekanntmachung des Hinweises auf die Patenterteilung: **05.08.2020**
(21) Anmeldenummer: 16173683.0
(22) Anmeldetag: 09.06.2016
(51) Int. Cl.: F01M 1/10, F16N 39/06, B01D 21/00, B01D 21/02, B03C 1/28, B03C 1/30, F03D 80/70

(54) **SCHMIERFETTVERSORGUNGSVORRICHTUNG SOWIE VERFAHREN ZUM SCHMIEREN EINES LAGERS EINER WINDENERGIEANLAGE**
LUBRICATING GREASE SUPPLY DEVICE AND METHOD FOR LUBRICATING A BEARING OF A WIND TURBINE
DISPOSITIF D'ALIMENTATION EN GRAISSE DE LUBRIFICATION ET PROCEDE DE LUBRIFICATION D'UN PALIER D'UNE EOLIENNE

(30) Priorität: 29.06.2015 DE 102015008301
(43) Veröffentlichungstag der Anmeldung: 04.01.2017
(73) Patentinhaber: Senvion GmbH, 22297 Hamburg (DE)
(72) Erfinder: EUSTERBARKEY, Carsten, 25813 Simonsberg (DE); HILDEBRANDT, Arved, 24118 Kiel (DE)
(74) Vertreter: Wallinger Ricker Schlotter Tostmann

(56) Entgegenhaltungen:
- EP-A1- 1 854 629
- WO-A1-2013/062594
- JP-A- 2012 154 472
- US-A- 5 435 414
- US-A1- 2004 134 859
- US-A1- 2013 068 253

## Beschreibung

Die Erfindung betrifft eine Schmierfettversorgungsvorrichtung einer Windenergieanlage. Ferner betrifft die Erfindung eine Windenergieanlage mit einem mit Schmierfett geschmierten Lager sowie die Verwendung einer Schmierfettversorgungsvorrichtung. Die Erfindung betrifft außerdem ein Verfahren zum Schmieren eines Lagers einer Windenergieanlage mit Schmierfett.

Die Lager einer Windenergieanlage können mit Fett oder Öl geschmiert werden. Bei fettgeschmierten Lagern wird üblicherweise eine Vorratsschmierung verwendet, d.h. das Lager wird mit einer großen Menge Schmierfett befüllt. Dies geschieht beispielsweise über einen Außenring des Lagers, von dem aus das Schmierfett radial in den innenliegenden Lagerraum eintritt. Es ist ebenso bekannt, eine zeitabhängige Nachschmierung vorzunehmen. Beispielsweise wird in vorgegebenen Zeitintervallen eine bestimmte Menge Schmierfett in das Lager gegeben. Aus EP 1 801 415 B1 ist außerdem bekannt, die Schmierfettzufuhr in Abhängigkeit von der Drehzahl oder der Temperatur zu steuern.

Aus US 2013/068253 A1 ist ein System zur Versorgung eines Getriebes mit Schmiermittel bekannt, bei dem es sich beispielsweise um Öl oder Fett handelt. Mit Hilfe einer Ölpumpe wird dem Getriebe Öl aus einem Reservoir zugeführt. Über eine Rückführleitung gelangt das Öl von dem Getriebe wieder in das Reservoir. Es liegt ein geschlossener Schmiermittelkreislauf vor.

Es ist eine Aufgabe der Erfindung, eine Schmierfettversorgungsvorrichtung einer Windenergieanlage, eine Windenergieanlage, eine Verwendung einer Schmierfettversorgungsvorrichtung sowie ein Verfahren zum Schmieren eines Lagers einer Windenergieanlage mit Schmierfett anzugeben, wobei eine verbesserte Fett-Schmierung des Lagers erzielt werden soll und insbesondere der technische Aufwand zum Realisieren der verbesserten Schmierung möglichst gering gehalten werden soll.

Die Aufgabe wird gelöst durch eine Schmierfettversorgungsvorrichtung einer Windenergieanlage mit einer Schmierfettfördervorrichtung und einer Schmierfettreinigungsvorrichtung, wobei die Schmierfettfördervorrichtung dazu eingerichtet ist, Schmierfett in einer Förderrichtung in einem geschlossenen Schmierfettkreislauf zu fördern, wobei ein zu schmierendes Lager der Windenergieanlage und die Schmierfettreinigungsvorrichtung jeweils einen Abschnitt des geschlossenen Schmierfettkreislaufs bilden, dadurch gekennzeichnet, dass die Schmierfettreinigungsvorrichtung einen magnetischen Abscheider und zumindest einen Schwerkraftabscheider aufweist.

Die Konstruktion der Schmierfettversorgungsvorrichtung gemäß Aspekten der Erfindung beruht auf den folgenden Überlegungen. Es besteht grundsätzlich die Möglichkeit, dass Verunreinigungen in das Lager der Windenergieanlage eindringen, beispielsweise bei der Installation/Montage oder im Rahmen von später durchgeführten Wartungsarbeiten. Außerdem ist es möglich, dass sich Abriebpartikel, welche während des Betriebs des Lagers auftreten, im zur Schmierung des Lagers verwendeten Schmierfett ansammeln.

Verunreinigungen und Abrieb sollen im Folgenden allgemein als Partikel bezeichnet werden.

Sowohl die Partikel, welche im Rahmen der Herstellung oder durch Wartungsarbeiten in das Schmierfett eingetragen werden, als auch die in Folge des Betriebs auftretenden Partikel im Lagerfett führen zu einer unerwünschten Erhöhung der Reibung und erhöhtem Verschleiß des Lagers. Beispielsweise können Einkerbungen auftreten, vor allem in den Laufflächen.

Außerdem sind die Möglichkeiten, dem Lager Schmierfett zuzuführen, bei der üblichen Verbrauchsschmierung sehr begrenzt.

Vorteilhaft ist bei der Schmierfettversorgungsvorrichtung gemäß Aspekten der Erfindung eine Schmierfettreinigungsvorrichtung vorgesehen, mit deren Hilfe Partikel aus dem Schmierfett des Lagers entfernt werden. Diese Maßnahme verringert den Verschleiß des Lagers und erhöht dessen Lebensdauer. Der negative Einfluss der im Lagerfett vorhandenen Partikel wird wesentlich verringert.

Durch die alternative Verwendung eines magnetischen Abscheiders oder eines Schwerkraftabscheiders in der Schmierfettreinigungsvorrichtung werden schon viele Partikel, beispielsweise durch den magnetischen Abscheider magnetische Partikel, und entsprechend schwere Partikel durch den Schwerkraftabscheider, aus dem Schmierfettkreislauf entfernt.

Die Schmierfettreinigungsvorrichtung weist den magnetischen Abscheider und zumindest den einen Schwerkraftabscheider auf.

Durch die Verwendung eines magnetischen Abscheiders und eines Schwerkraftabscheiders in der Schmierfettreinigungsvorrichtung werden sowohl magnetische Partikel, bei denen es sich vor allem um Abrieb handelt, als auch unmagnetische Partikel, die beispielsweise im Rahmen der Wartung oder bei der Herstellung in das Lager eindringen, aus dem Schmierfettkreislauf entfernt. Gleichzeitig wird in einem solchen geschlossenen Schmierfettkreislauf, der beispielsweise durch eine von der Schmierfettfördervorrichtung umfasste Pumpe zur Förderung des Schmierfetts in dem geschlossenen Schmierfettkreislauf aufrechterhalten wird, dem Lager stets die benötigte Menge Schmierfett zugeführt. Das Risiko einer Unterversorgung des Lagers mit Schmierfett wird minimiert.

Der permanente Fettaustausch sorgt außerdem für eine Art "Spül-Effekt". Das Schmierfett kann nämlich mit einem relativ hohen Volumenstrom gefördert werden, so dass im Lager vorhandene Partikel gemeinsam mit dem Schmierfett aus dem Lager gefördert und anschließend herausgefiltert werden. Das Lager, genauer dessen Lagerflächen werden also gleichzeitig geschmiert und von Verunreinigungen befreit.

Gleichzeitig werden die Vorteile einer Schmierfettschmierung aufrechterhalten. Dies sind beispielsweise die gute Adhäsionscharakteristik von Schmierfett, insbesondere im Vergleich zu Öl, dessen korrosionsschützende Wirkung, die Aufrechterhaltung der Schmierung der Lager auch bei Stillstand der Windenergieanlage sowie geringe Anforderungen im Hinblick auf die Abdichtung des Lagergehäuses.

Alle diese Maßnahmen sorgen für eine zuverlässige Schmierung des Lagers, eine hohe Lebensdauer aufgrund eines geringen Verschleißes sowie ein geringes Reibmoment des Lagers.

Gegenüber einer bekannten offenen Durchsatzschmierung, bei der mehr Schmierfett eingebracht wird und das überschüssige Schmierfett in Auffangbehältern aufgefangen wird und anschließend das aufgefangene Schmierfett wiederverwendet wird, hat ein geschlossenes System, wie es erfindungsgemäß vorgesehen ist, den Vorteil einer höheren Umweltfreundlichkeit, da weniger Schmierfett verbraucht wird. Dies schlägt sich in deutlich niedrigeren Kosten nieder.

Zudem ist es bevorzugt, das Schmierfett im Kreislauf zu kühlen, bevorzugterweise im unteren Bereich des Kreislaufs. Im unteren Bereich des Kreislaufs, beispielsweise im unteren Bereich des Maschinenhauses, ist es aufgrund einer relativ hohen Masse, insbesondere Metallmasse der Tragstruktur, kühler als in der weiteren Umgebung, so dass eine Kühlung des Schmierfettes, das im Kreislauf geführt wird, automatisch geschieht. Es kann zudem vorzugsweise vorgesehen sein, eine Kühlvorrichtung zur Kühlung des Schmierfettes einzusetzen.

Bei dem Lager der Windenergieanlage handelt es sich beispielsweise um ein Rotorlager, ein Blattverstelllager (Pitchlager), ein Turmlager oder auch ein anderes Lager einer sich drehenden Welle. Die Lager können als Wälzlager oder als Gleitlager ausgebildet sein. Ferner handelt es sich bei den Lagern wahlweise um Axial- oder um Radiallager. Beispielsweise ist das Lager ein axialwirksames Wälzlager, wie es als Rotorlager Verwendung findet.

Das Schmierfett hat vorzugsweise eine Fettkonsistenz der NLGI-Klasse von 000 bis 2, insbesondere von 00 bis 2, ferner insbesondere 00 oder 1,5.

Gemäß einer vorteilhaften Ausführungsform ist die Schmierfettversorgungsvorrichtung dadurch fortgebildet, dass der magnetische Abscheider und zumindest ein Schwerkraftabscheider in einem gemeinsamen Filtereinsatz aufgenommen sind, wobei der Filtereinsatz als austauschbares Modul ausgebildet ist.

Mit anderen Worten sind der magnetische Abscheider und zumindest ein Schwerkraftabscheider in dem gemeinsamen Filtereinsatz montiert. Diese bilden mit einem Gehäuse oder Rahmen des Filtereinsatzes ein austauschbares Modul. Diese Konstruktion erleichtert den Service der Schmierfettversorgungsvorrichtung, da zum Entfernen der aus dem Schmierfett herausgefilterten Verunreinigungen bevorzugt die gesamte Einheit, d.h. das gesamte Modul, ausgetauscht wird. Die Servicezeit wird vorteilhaft auf ein Minimum begrenzt. Das entnommene Modul kann anschließend gereinigt bzw. aufbereitet werden, so dass es für einen erneuten Einsatz in einer baugleichen oder ähnlichen Schmierfettversorgungsvorrichtung bereit ist.

Vorteilhaft ist die Schmierfettversorgungsvorrichtung ferner dadurch fortgebildet, dass ein erster und ein zweiter Schwerkraftabscheider vorhanden sind, die im geschlossenen Schmierfettkreislauf aufeinanderfolgend angeordnet sind.

Eine zweistufige Schwerkraftabscheidung von in dem Schmierfett vorhandenen Partikeln erlaubt eine besonders gründliche Reinigung des Schmierfetts. Selbstverständlich ist es gemäß weiteren Ausführungsformen vorgesehen, dass mehr als zwei Schwerkraftabscheider in die Schmierfettreinigungsvorrichtung aufeinanderfolgend angeordnet sind.

Vorteilhaft ist die Schmierfettversorgungsvorrichtung ferner dadurch fortgebildet, dass der magnetische Abscheider permanentmagnetisehe magnetfelderzeugende Mittel umfasst. Gemäß einer Weiterbildung ist ferner vorgesehen, dass die magnetfelderzeugenden Mittel zumindest näherungsweise senkrecht zur Schmierfettförderrichtung ausgerichtete Stäbe sind.

Permanentmagnetische Stäbe haben sich als besonders wirkungsvoll erwiesen, um magnetische Partikel aus dem Schmierfett abzuscheiden. Sie stellen insbesondere in ihrer Anordnung senkrecht zur Schmierfettförderrichtung eine große Oberfläche bereit, welche von dem Schmierfett umströmt wird. So lagern sich im Schmierfett vorhandene magnetische Partikel effektiv an der Oberfläche der Stäbe an. Permanentmagnetische magnetfelderzeugende Mittel, beispielsweise Permanentmagnete, sind praktisch wartungsfrei und außerdem zu geringen Kosten gut verfügbar. Ein magnetischer Abscheider gemäß dieser Ausführungsform ist somit konstruktiv besonders einfach und außerdem ökonomisch herstellbar.

In einem Schmiermittel eines Lagers vorhandene Verunreinigungen bzw. Abriebpartikel lassen stets einen Rückschluss auf den Zustand des Lagers zu. Gemäß einer weiteren Ausführungsform ist vorgesehen, dass eine Schmierfett-Überwachungsvorrichtung zur Überwachung eines Zustandes des zu schmierenden Lagers von dem geschlossenen Schmierfettkreislauf umfasst ist. Bevorzugt handelt es sich bei einer solchen Vorrichtung zur Überwachung des Zustands eines zu schmierenden Lagers um einen Partikelzähler.

Aus dem von der Überwachungsvorrichtung bereitgestellten Messwert lässt sich jedoch nicht nur auf den Zustand des Lagers schließen. Es ist ebenso möglich, diesen Messwert als Grenzwert zu verwenden, um einen Hinweis darauf zu erhalten, dass die Schmierfettreinigungsvorrichtung gereinigt oder gewartet werden sollte. Steigt nämlich die Partikelkonzentration im Schmierfett über einen gewissen Grenzwert, so kann beispielsweise die Aufnahmefähigkeit des magnetischen Abscheiders oder des zumindest einen Schwerkraftabscheiders erschöpft sein. Um eine gewünschte Qualität des Schmierfetts im Hinblick auf seine Verunreinigung aufrecht zu erhalten, sollte eine Reinigung bzw. Wartung der Schmierfettreinigungsvorrichtung vorgenommen werden.

Gemäß einer weiteren Ausführungsform ist vorgesehen, dass mehrere Lager der Windenergieanlage in den Schmierfettkreislauf integriert sind. Bei dem Lager der Windenergieanlage handelt es sich beispielsweise um ein Rotorlager, Blattverstelllager, Turmlager oder dgl. Diese Lager sind beispielsweise in Serie oder parallel in den Schmierfettkreislauf integriert. Vorteilhaft wird auf diese Weise mithilfe einer einzigen Schmierfettversorgungsvorrichtung die hohe Qualität des Schmierfetts für eine Vielzahl von Lagern der Windenergieanlage sichergestellt.

Schließlich ist gemäß einer weiteren vorteilhaften Ausführungsform die Schmierfettversorgungsvorrichtung dadurch fortgebildet, dass ein Direktschmiersystem in den geschlossenen Schmierfettkreislauf integriert ist, wobei das Direktschmiersystem eine Schmierfetteinbringvorrichtung mit einer Austrittsöffnung umfasst, die gegen eine Laufbahn des Lagers ausgerichtet ist.

Ein Direktschmiersystem stellt eine sichere und zuverlässige Schmierung der Laufbahn des Lagers sicher. Es wird eine gezielte Schmierung des Lagers mit Schmierfett möglich. Bevorzugt handelt es sich bei der Schmierfetteinbringvorrichtung um eine Schmierfetteinspritzvorrichtung. Entsprechend wird das Schmierfett vorzugsweise auf die Laufbahn des Lagers aufgespritzt. Die Austrittsöffnung ist entsprechend bevorzugt als Düse ausgebildet, wodurch ein sehr effizientes Einspritzen von Schmierfett ermöglicht ist.

Die Aufgabe wird ferner gelöst durch eine Windenergieanlage mit zumindest einem mit Schmierfett geschmierten Lager, wobei die Windenergieanlage durch eine Schmierfettversorgungsvorrichtung nach einem oder mehreren der zuvor genannten Aspekte fortgebildet ist.

Bei dem Lager der Windenergieanlage handelt es sich beispielsweise um das Rotorlager. Zu dessen Schmierung weist die Windenergieanlage eine entsprechende Schmierfettversorgungsvorrichtung auf. Es ist ferner insbesondere vorgesehen, dass mehrere Lager der Windenergieanlage, wie beispielsweise das Rotorlager, ein oder mehrere Blattverstelllager oder auch das Turmlager, in Reihe oder parallel in den geschlossenen Schmierfettkreislauf der Schmierfettversorgungsvorrichtung integriert sind.

Die vorteilhaft erhöhte Lebensdauer der Lager der Windenergieanlage wirkt sich ebenso vorteilhaft auf deren Gesamtleistung, insbesondere auf ihre Lebensdauer und Wirtschaftlichkeit, aus.

Im Übrigen treffen gleiche oder ähnliche Vorteile und Aspekte, wie sie bereits im Hinblick auf die Schmierfettversorgungsvorrichtung erwähnt wurden, auch auf eine Windenergieanlage mit einer solchen Schmierfettversorgungsvorrichtung zu.

Die Aufgabe wird ferner gelöst durch die Verwendung einer Schmierfettversorgungsvorrichtung nach einem oder mehreren der genannten Aspekte und Ausführungsformen in einer Windenergieanlage mit zumindest einem mit Schmierfett geschmierten Lager.

Die zuvor im Hinblick auf die Windenergieanlage und die Schmierfettversorgungsvorrichtung genannten Aspekte treffen in gleicher oder ähnlicher Weise auch auf die Verwendung der Schmierfettversorgungsvorrichtung in einer Windenergieanlage zu und sollen daher nicht wiederholt werden.

Schließlich wird die Aufgabe gelöst durch ein Verfahren zum Schmieren eines Lagers einer Windenergieanlage mit Schmierfett, wobei das Schmierfett in einer Förderrichtung in einem geschlossenen Schmierfettkreislauf gefördert wird, wobei das zu schmierende Lager der Windenergieanlage und eine Schmierfettreinigungsvorrichtung jeweils einen Abschnitt des geschlossenen Schmierfettkreislaufs bilden, dadurch gekennzeichnet, dass in dem Schmierfett vorhandene Partikel in der Schmierfettreinigungsvorrichtung mit einem magnetischen Abscheider und mit zumindest einem Schwerkraftabscheider abgeschieden werden.

Das Verfahren gemäß Aspekten der Erfindung ist herkömmlichen Schmierverfahren, wie beispielsweise der Verlustschmierung, weit überlegen. Es erfolgt nicht eine einmalige oder ggf. im Rahmen von Servicearbeiten aufwendig zu wiederholende Schmierung des Lagers durch entsprechende Fett-Befüllung, sondern eine kontinuierliche gleichmäßige Schmierung. Außerdem werden Verunreinigungen, wie insbesondere Verschleißpartikel, aus dem Lager entfernt. Es findet ein hoher Austausch des Schmiermittels, d.h. ein hoher Schmierfettaustausch, im Lager statt. Dies bewirkt ferner vorteilhaft eine Art "Spül-Effekt".

Die in dem Schmierfett vorhandenen Partikel werden in der Schmierfettreinigungsvorrichtung mit dem magnetischen Abscheider und mit zumindest dem einen Schwerkraftabscheider abgeschieden. Gemäß einer vorteilhaften Ausführungsform ist das Verfahren dadurch fortgebildet, dass in dem magnetischen Abscheider mit permanentmagnetischen magnetfelderzeugenden Mitteln ein zum Abscheiden von Partikeln dienendes Magnetfeld erzeugt wird.

Gemäß einer weiteren vorteilhaften Ausführungsform ist ferner vorgesehen, dass ein Zustand des Lagers überwacht wird, indem ein Zustand des Schmierfetts, insbesondere im Hinblick auf eine Anzahl von in dem Schmierfett vorhandenen Partikeln, überwacht wird.

Anhand des gewonnenen Parameters, der den Zustand des Lagers beschreibt und anhand von dessen Wert das Lager überwacht wird, kann zusätzlich ein Rückschluss auf den Zustand der Schmierfettreinigungsvorrichtung gezogen werden. So ist insbesondere vorgesehen, dass bei Überschreiten eines vorbestimmten Grenzwerts eine Wartungsmitteilung an eine Serviceleitstelle gesendet wird. Diese Mitteilung umfasst Informationen, welche auf die Notwendigkeit eines Austausches, einer Reinigung oder Wartung der Schmierfettreinigungsvorrichtung hinweisen.

Gemäß einer weiteren vorteilhaften Ausführungsform ist außerdem vorgesehen, dass ein Direktschmiersystem in den geschlossenen Schmierfettkreislauf integriert ist, wobei das Direktschmiersystem eine Schmierfetteinbringvorrichtung mit einer Austrittsöffnung umfasst und durch diese Austrittsöffnung Schmierfett direkt auf eine Laufbahn des Lagers aufgebracht wird.

Vorteilhafte Aspekte eines Direktschmiersystems sind bereits im Hinblick auf die Schmierfettversorgungsvorrichtung erwähnt worden und sollen nicht wiederholt werden. Gleiches gilt auch für die weiteren im Zusammenhang mit der Schmierfettversorgungsvorrichtung erwähnten Aspekte und Vorteile, welche in gleicher oder ähnlicher Weise auch auf das Verfahren zum Schmieren eines Lagers einer Windenergieanlage zutreffen und daher an dieser Stelle nicht wiederholt werden sollen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: einen schematischen Querschnitt durch die Gondel einer Windenergieanlage,
- Fig. 2: eine schematisch vereinfachte Schnittansicht eines Details einer Schmierfettversorgungsvorrichtung und
- Fig. 3: eine schematische Darstellung einer Schmierfettversorgungsvorrichtung.

In den Zeichnungen sind jeweils gleiche oder gleichartige Elemente und/oder Teile mit denselben Bezugsziffern versehen, so dass von einer erneuten Vorstellung jeweils abgesehen wird.

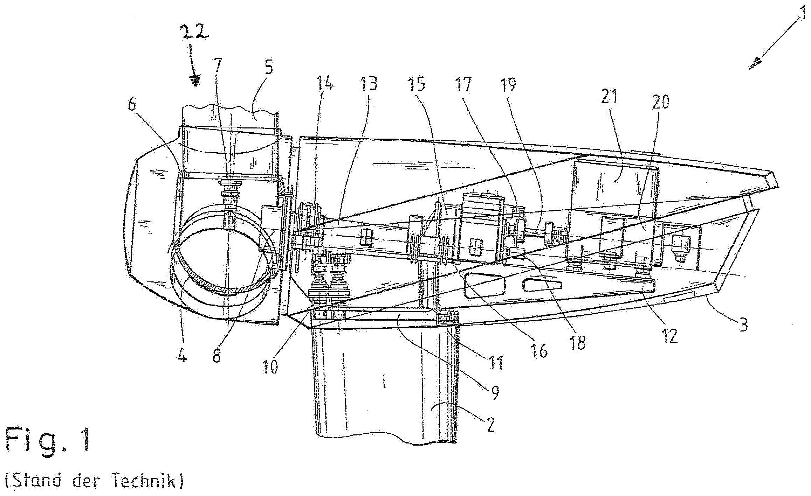

Fig. 1 zeigt eine Querschnittsdarstellung durch eine Gondel 3 einer Windenergieanlage 1, beispielsweise der Windenergieanlage MD70 der Anmelderin. In DE 10 2012 205 086 A1 ist diese Anlage ebenfalls beschrieben.

Die Gondel 3 sitzt auf einem Turm 2, dessen gondelnaher Abschnitt dargestellt ist. Links in Fig. 1 ist ein Windrotor 22 dargestellt. Dieser umfasst eine Rotornabe 4 und Rotorblätter 5, die nur im Bereich der Rotorblattwurzel dargestellt sind. Die Rotorblätter 5 weisen im Bereich der Rotorblattwurzel jeweils ein Rotorblattlager 6 auf, an das ein Blattverstellantrieb 7 angreift. Der Blattverstellantrieb 7 wird durch eine Steuerung 8 angesteuert und verändert im Betrieb der Windenergieanlage 1 den Blatteinstellwinkel (Pitch-Winkel) des jeweiligen Rotorblatts 5.

Die Gondel 3 beherbergt einen Maschinenträger 12, der über einen Turmkopfdrehkranz 9 und ein nicht dargestelltes Turmlager mit dem Turm 2 verbunden ist. Am Turmkopfdrehkranz 9 greifen Windnachführungsmotoren 10 einer Azimutverstellung an, die die Gondel 3 bzw. den Windrotor 22 in Richtung auf die herrschende Windrichtung ausrichten. Hierzu sind beispielhaft vier Windnachführungsmotoren 10 vorhanden, von denen zwei auf der dargestellten Seite angeordnet sind und zwei verdeckt dahinter auf der gegenüberliegenden Seite des Maschinenträgers 12. Ebenfalls greifen am Turmkopfdrehkranz 9 Azimutbremsen 11 an, die der Arretierung der Azimuteinstellung des Windrotors 22 dienen.

Der Windrotor 22 treibt eine Rotorwelle 13 an, die in einem als Wälzlager ausgebildeten Rotorlager 14 drehbar gelagert ist. Bei der Windenergieanlage MD70 der Anmelderin ist das Rotorlager 14 als Festlager ausgebildet, das nur wenige Millimeter Spiel in axialer Richtung der Rotorwelle 13 erlaubt. Die Rotorwelle 13 treibt ein Getriebe 15, das die langsame Drehbewegung der Rotorwelle 13 in eine schnelle Drehbewegung einer Generatorwelle 19, die mit Kupplungen dargestellt ist, umsetzt. Die schnelle Welle des Getriebes 15 treibt wiederum einen Generator 20 zur Stromerzeugung an, der mit einem Wärmetauscher 21 ausgestattet ist. Alternativ sind zur Lagerung der Rotorwelle zwei Rotorlager vorgesehen. Sowohl das vordere als auch das hintere Lager kann als Festlager zur Aufnahme des Rotorschubs ausgebildet sein.

Das Getriebe 15 weist eine Rotorbremse 17 und einen Schleifringüberträger 18 auf sowie zwei elastische Getriebeaufhängungen 16 bzw. Auflager, von denen eines in Fig. 1 dargestellt ist, während sich das andere symmetrisch auf der gegenüberliegenden Seite des Getriebes 15 befindet und somit durch das Getriebe 15 verdeckt ist.

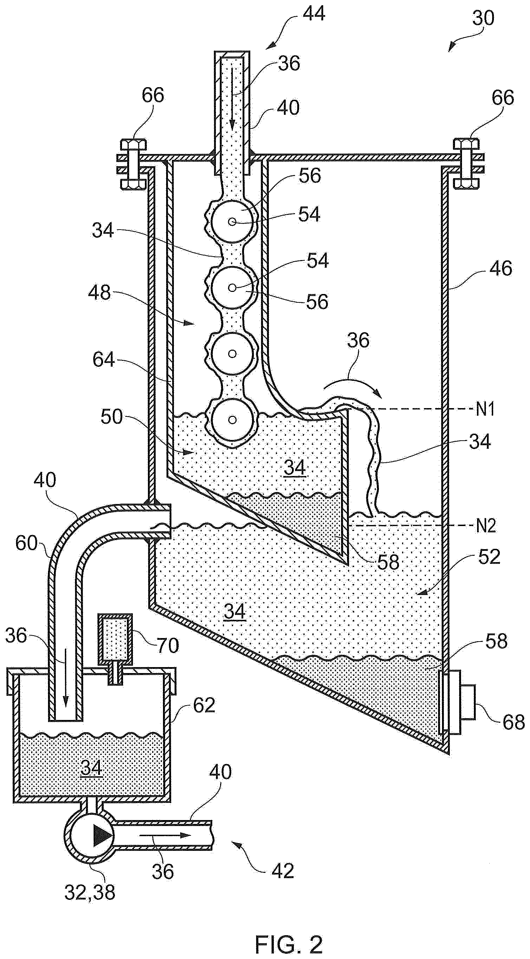

Fig. 2 zeigt in vereinfachter und schematischer Querschnittsansicht eine Schmierfettversorgungseinrichtung 30, wie sie beispielsweise in der in Fig. 1 dargestellten Windenergieanlage 1 zum Einsatz kommt. Mit anderen Worten wird die Schmierfettversorgungsvorrichtung 30 in einer solchen Windenergieanlage 1 verwendet, bildet einen oder ist ein Bestandteil bzw. Teil einer solchen Windenergieanlage 1.

Die Schmierfettversorgungsvorrichtung 30 ist in Fig. 2 abschnittsweise dargestellt. Sie umfasst eine Schmierfettfördervorrichtung 32, die dazu eingerichtet ist, Schmierfett 34 in einer beispielhaft mit Pfeilen dargestellten Förderrichtung 36 in einem geschlossenen Schmierfettkreislauf zu fördern. Es handelt sich um einen fluidisch geschlossenen Kreislauf. Zur Förderung des Schmierfetts umfasst die Schmierfettfördervorrichtung eine Pumpe 38 und ein abschnittsweise dargestelltes Rohrleitungssystem 40.

Zumindest ein zu schmierendes Lager der Windenergieanlage 1 ist in den geschlossenen Schmierfettkreislauf integriert, also beispielsweise über das Rohrleitungssystem 40 mit der Schmierfettversorgungsvorrichtung 30 verbunden. Mit anderen Worten bildet das Lager einen Abschnitt des geschlossenen Schmierfettkreislaufs.

Das Schmierfett 34 wird an einem Ausgang 42 von der Schmierfettversorgungsvorrichtung 30 bereitgestellt und dem zu schmierenden Lager zugefördert. Aus dem Lager der Windenergieanlage 1 abgefördertes Schmierfett erreicht beispielsweise über das Rohrleitungssystem 40 einen Eingang 44 der Schmierfettversorgungsvorrichtung 30.

Bei dem zu schmierenden Lager der Windenergieanlage 1 handelt es sich beispielsweise um das Rotorlager 14, ein oder mehrere Rotorblattlager 6 oder auch das nicht dargestellte Turmlager. Es ist ebenso vorgesehen, dass mehrere Lager gleichzeitig mit der Schmierfettversorgungsvorrichtung 30 verbunden sind und von dieser versorgt werden. Diese Lager sind in Reihe, d.h. hintereinander, oder parallel in den geschlossenen Schmierfettkreislauf integriert. Das bzw. die zu schmierenden Lager der Windenergieanlage 1 bilden einen Abschnitt des fluidisch geschlossenen Schmierfettkreislaufs.

Die Schmierfettversorgungsvorrichtung 30 umfasst ferner eine Schmierfettreinigungsvorrichtung 46. Diese bildet ebenfalls einen Abschnitt des geschlossenen Schmierfettkreislaufs. In dem in Fig. 2 dargestellten Ausführungsbeispiel umfasst die Schmierfettreinigungsvorrichtung 46 einen magnetischen Abscheider 48 sowie einen ersten Schwerkraftabscheider 50 und einen zweiten Schwerkraftabscheider 52. Gemäß weiterer Ausführungsbeispiele ist vorgesehen, dass die Schmierfettversorgungsvorrichtung 30 lediglich einen einzigen Schwerkraftabscheider oder auch mehr als zwei Schwerkraftabscheider umfasst.

Die Schmierfettreinigungsvorrichtung 46 bewirkt, dass Schmierfett 34, welches ihr am Eingang 44 zugeführt wird, gereinigt und am Ausgang 42 in gereinigter Form dem geschlossenen Schmierfettkreislauf wieder zugeführt wird. Das Schmierfett 34 eines zu schmierenden Lagers 6, 14 der Windenergieanlage 1 weist, bedingt durch Verschleiß, ferromagnetische Partikel als Verunreinigungen auf. Das verunreinigte Schmierfett 34, welches von dem zu schmierenden Lager 6, 14 zum Eingang 44 der Schmierfettreinigungsvorrichtung 46 gelangt, wird zunächst dem magnetischen Abscheider 48 zugeführt. Dieser umfasst gemäß dem in Fig. 2 dargestellten Ausführungsbeispiel mehrere, zumindest näherungsweise, senkrecht zur Schmierfettförderrichtung 36 orientierte Stäbe 54, welche permanentmagnetische magnetfelderzeugende Mittel umfassen. Es handelt sich also beispielsweise um Stäbe 54 aus einem permanentmagnetischen Material. Gemäß weiteren Ausführungsbeispielen sind als magnetfelderzeugende Mittel Elektromagnete oder dgl. vorgesehen.

Die in dem Schmierfett 34 vorhandenen magnetischen Partikel lagern sich an den Stäben 54 (von denen aus Gründen der Übersichtlichkeit der Zeichnung lediglich einige mit Bezugszeichen versehen sind) an und bilden dort entsprechende Ablagerungen 56 (von denen ebenfalls aus Gründen der Übersichtlichkeit lediglich einige mit Bezugszeichen versehen sind).

Das von magnetischen Partikeln weitgehend befreite Schmierfett 34 gelangt anschließend in den ersten Schwerkraftabscheider 50. In diesem als Topf oder Wanne ausgebildeten Gefäß sedimentieren im Schmierfett 34 vorhandene nichtmagnetische Partikel bzw. Verunreinigungen. Im unteren Bereich des ersten Schwerkraftabscheiders 50 bilden sich somit Ablagerungen 58 nichtmagnetischer Partikel. Erreicht der Füllstand des ersten Schwerkraftabscheiders 50 das erste Niveau N1, schwappt das Schmierfett 34 vom ersten Schwerkraftabscheider 50 in den zweiten Schwerkraftabscheider 52. Der zweite Schwerkraftabscheider 52 weist bevorzugt ein größeres Volumen als der erste Schwerkraftabscheider 50 auf, so dass die Verweildauer des Schmierfetts 34 im zweiten Schwerkraftabscheider 52 größer ist. So ist es möglich, dass sich in dem zweiten Schwerkraftabscheider 52 feinere Partikel ablagern bzw. dort sedimentieren. Entsprechend bildet sich dort ebenfalls eine Ablagerung 58 nichtmagnetischer Partikel aus. Erreicht der Füllstand des zweiten Schwerkraftabscheiders 52 das zweite Niveau N2, so läuft das Schmierfett 34 über die Verbindungsleitung 60 in einen Zwischenspeicher 62. Im Zwischenspeicher 62 sammelt sich das von Partikeln gereinigte Schmierfett 34, bis es anschließend über die Pumpe 38 zum Ausgang 42 der Schmierfettreinigungsvorrichtung 46 gefördert wird. Der Zwischenspeicher 62 umfasst ferner einen Belüftungstrockner 70. Von dort gelangt das gereinigte Schmierfett 34 über den geschlossenen Schmierfettkreislauf erneut zu einem oder mehreren der zu schmierenden Lager 6, 14 der Windenergieanlage 1.

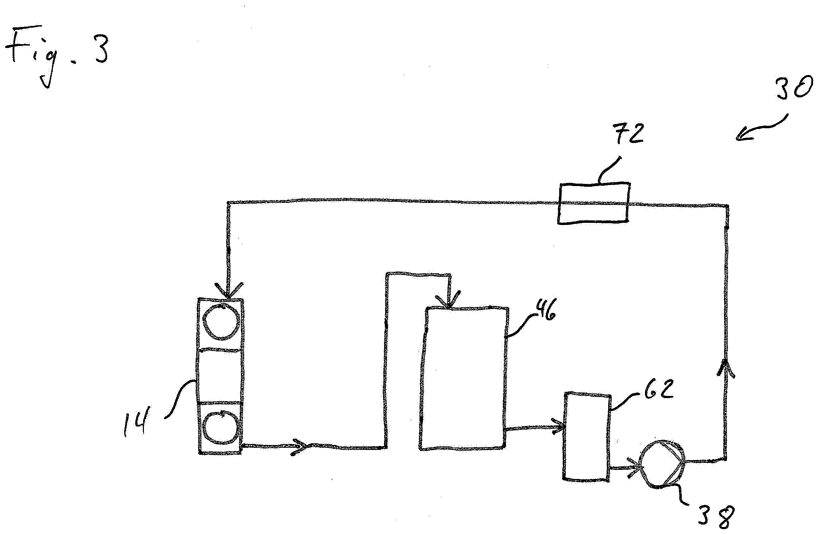

Fig. 3 zeigt schematisch die Schmierfettversorgungsvorrichtung 30 einer Windenergieanlage 1. Ausgehend von einem Ablauf eines zu schmierenden Lagers, beispielsweise eines Rotorlagers 14, gelangt das zu reinigende Schmierfett zum Eingang der Schmierfettreinigungsvorrichtung 46 und von dort weiter zum Zwischenspeicher 62. Die Pumpe 38 fördert das gereinigte Schmierfett 34 erneut zum Lager der Windenergieanlage. Wie Fig. 3 illustriert, wird das Schmierfett in einem geschlossenen Kreislauf gefördert.

Nach gegebener Zeit wird sich in der Schmierfettreinigungsvorrichtung 46 eine maximale Menge an Ablagerungen magnetischer Partikel 56 an den Stäben 54 des magnetischen Abscheiders 48 sowie eine maximale Menge an Ablagerungen nicht magnetischer Partikel 58 in dem ersten und zweiten Schwerkraftabscheider 50, 52 ansammeln. Um die Reinigungswirkung der Schmierfettreinigungsvorrichtung 46 aufrecht zu erhalten, ist eine Wartung bzw. Reinigung der Schmierfettreinigungsvorrichtung 46 vorgesehen.

Um eine solche Wartung zu erleichtern, sind der magnetische Abscheider 48 und der erste Schwerkraftabscheider 50 in einem gemeinsamen Filtereinsatz 64 aufgenommen. Der Filtereinsatz 64 ist als austauschbares Modul ausgebildet und daher über lösbare Verbindungen, beispielsweise Schrauben 66, mit dem Gehäuse der Schmierfettreinigungsvorrichtung 46 verbunden. Zur Wartung wird der komplette Filtereinsatz 64 der Schmierfettreinigungsvorrichtung 46 entnommen und beispielsweise durch einen neuen oder gereinigten Filtereinsatz ersetzt. Derjenige Filtereinsatz 64, welcher die Ablagerungen 56, 58 magnetischer und nicht magnetischer Partikel umfasst, wird anschließend gereinigt oder einer Aufbereitung zugeführt. Die in dem zweiten Schwerkraftabscheider 52 vorhandenen Ablagerungen 58 nicht magnetischer Partikel werden über einen Slop-Ablass 68 (Schmutz-Ablass) im Rahmen der durchgeführten Wartungsarbeiten abgelassen.

Die Schmierfettversorgungsvorrichtung 30 (vgl. Fig. 3) umfasst ferner eine Schmierfett-Überwachungsvorrichtung 72. Bei dieser handelt es sich bevorzugt um einen Partikelzähler. Die Schmierfett-Überwachungsvorrichtung 72 dient primär der Überwachung eines Zustandes des zu schmierenden Lagers 6, 14. Sie ist ferner bevorzugt in den geschlossenen Schmierfettkreislauf integriert. Anhand des Wertes, welcher zur Beschreibung des Zustands des zu schmierenden Lagers 6, 14, erfasst wird, sind jedoch ebenfalls Rückschlüsse auf einen Zustand der Schmierfettversorgungsvorrichtung 30 möglich. Ist diese gesättigt, also mit anderen Worten nicht mehr in der Lage, eine ausreichende Menge magnetischer oder nicht magnetischer Partikel aufzunehmen, so wird deren Anzahl im geförderten Schmierfett 34 zunehmen. Erreicht die Konzentration der Partikel im Schmierfettkreislauf einen kritischen Wert, so ist es ratsam, die Schmierfettreinigungsvorrichtung 46 einer Reinigung zu unterziehen bzw. einen Service derselben zu veranlassen.

Hierzu ist die Schmierfett-Überwachungsvorrichtung 72 insbesondere mit einer Leitstelle über eine entsprechende (nicht dargestellte) Datenleitung verbunden, so dass ein entsprechender Wartungshinweis an die Leitstelle übertragen werden kann.

Ferner umfasst die Schmierfettversorgungsvorrichtung 30 ein nicht näher dargestelltes Direktschmiersystem. Dieses ist ebenfalls in den geschlossenen Schmierfettkreislauf integriert. Das Direktschmiersystem umfasst eine Schmierfetteinbringvorrichtung mit einer Austrittsöffnung, die gegen eine Laufbahn des Lagers 6, 14 ausgerichtet ist. Ein solches Direktschmiersystem erlaubt eine gezielte Schmierung der Laufbahn des Lagers 6, 14, so dass dessen Schmierung stets optimal gewährleistet ist.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 1: Windenergieanlage
- 2: Turm
- 3: Gondel
- 4: Rotornabe
- 5: Rotorblatt
- 6: Rotorblattlager
- 7: Blattverstellantrieb
- 8: Steuerung der Blattverstellung
- 9: Turmkopfdrehkranz
- 10: Windnachführungsmotoren
- 11: Azimutbremsen
- 12: Maschinenträger
- 13: Rotorwelle
- 14: Rotorlager
- 15: Getriebe
- 16: elastische Getriebeaufhängung
- 17: Rotorbremse
- 18: Schleifringüberträger
- 19: Generatorwelle mit Kupplungen
- 20: Generator
- 21: Wärmetauscher
- 22: Windrotor
- 30: Schmierfettversorgungsvorrichtung
- 32: Schmierfettfördervorrichtung
- 34: Schmierfett
- 36: Förderrichtung
- 38: Pumpe
- 40: Rohrleitungssystem
- 42: Ausgang
- 44: Eingang
- 46: Schmierfettreinigungsvorrichtung
- 48: magnetischer Abscheider
- 50: erster Schwerkraftabscheider
- 52: zweiter Schwerkraftabscheider
- 54: Stäbe
- 56: Ablagerungen magnetischer Partikel
- 58: Ablagerungen nicht magnetischer Partikel
- 60: Verbindungsleitung
- 62: Zwischenspeicher
- 64: Filtereinsatz
- 66: Schrauben
- 68: Slop-Ablass
- 70: Belüftungstrockner
- 72: Schmierfett-Überwachungsvorrichtung

- N1: erstes Niveau
- N2: zweites Niveau

## Patentansprüche

1. Schmierfettversorgungsvorrichtung (30) einer Windenergieanlage (1), mit einer Schmierfettfördervorrichtung (32), und einer Schmierfettreinigungsvorrichtung (46), wobei die Schmierfettfördervorrichtung (32) dazu eingerichtet ist, Schmierfett (34) in einer Förderrichtung (36) in einem geschlossenen Schmierfettkreislauf zu fördern, wobei ein zu schmierendes Lager (6, 14) der Windenergieanlage (1) und die Schmierfettreinigungsvorrichtung (46) jeweils einen Abschnitt des geschlossenen Schmierfettkreislaufs bilden, **dadurch gekennzeichnet, dass** die Schmierfettreinigungsvorrichtung (46) einen magnetischen Abscheider (48) und zumindest einen Schwerkraftabscheider (50, 52) aufweist.

2. Schmierfettversorgungsvorrichtung (30) nach Anspruch 1, **dadurch gekennzeichnet, dass** der magnetische Abscheider (48) und zumindest ein Schwerkraftabscheider (50) in einem gemeinsamen Filtereinsatz (64) aufgenommen sind, wobei der Filtereinsatz (64) als austauschbares Modul ausgebildet ist.

3. Schmierfettversorgungsvorrichtung (30) nach Anspruch 1 oder 2, **dadurch gekennzeichnet, dass** ein erster (50) und ein zweiter Schwerkraftabscheider (52) vorhanden sind, die im geschlossenen Schmierfettkreislauf aufeinanderfolgend angeordnet sind.

4. Schmierfettversorgungsvorrichtung (30) nach einem der Ansprüche 1 bis 3, **dadurch gekennzeichnet, dass** der magnetische Abscheider permanentmagnetische magnetfelderzeugende Mittel umfasst, wobei insbesondere die magnetfelderzeugenden Mittel zumindest näherungsweise senkrecht zur Schmierfettförderrichtung (36) ausgerichtete Stäbe (54) sind.

5. Schmierfettversorgungsvorrichtung (30) nach einem der Ansprüche 1 bis 4, **dadurch gekennzeichnet, dass** eine Schmierfett-Überwachungsvorrichtung (72) zur Überwachung eines Zustandes des zu schmierenden Lagers (6, 14) von dem geschlossenen Schmierfettkreislauf umfasst ist.

6. Schmierfettversorgungsvorrichtung (30) nach einem der Ansprüche 1 bis 5, **dadurch gekennzeichnet, dass** mehrere Lager der Windenergieanlage (1) in den Schmierfettkreislauf integriert sind.

7. Schmierfettversorgungsvorrichtung (30) nach einem der Ansprüche 1 bis 6, **dadurch gekennzeichnet, dass** ein Direktschmiersystem in den geschlossenen Schmierfettkreislauf integriert ist, wobei das Direktschmiersystem eine Schmierfetteinbringvorrichtung mit einer Austrittsöffnung umfasst, die gegen eine Laufbahn des Lagers (6, 14) ausgerichtet ist.

8. Windenergieanlage (1) mit zumindest einem mit Schmierfett (34) geschmierten Lager (6, 14), **gekennzeichnet durch** eine Schmierfettversorgungsvorrichtung (30) nach einem der Ansprüche 1 bis 7.

9. Verwendung einer Schmierfettversorgungsvorrichtung (30) nach einem der Ansprüche 1 bis 7 in einer Windenergieanlage (1) mit zumindest einem mit Schmierfett (34) geschmierten Lager (6, 14).

10. Verfahren zum Schmieren eines Lagers (6, 14) einer Windenergieanlage (1) mit Schmierfett (34), wobei das Schmierfett (34) in einer Förderrichtung (36) in einem geschlossenen Schmierfettkreislauf gefördert wird, wobei das zu schmierende Lager (6,14) der Windenergieanlage (1) und eine Schmierfettreinigungsvorrichtung (46) jeweils einen Abschnitt des geschlossenen Schmierfettkreislaufs bilden, **dadurch gekennzeichnet, dass** in dem Schmierfett (34) vorhandene Partikel in der Schmierfettreinigungsvorrichtung (46) mit einem magnetischen Abscheider (48) und mit zumindest einem Schwerkraftabscheider (50, 52) abgeschieden werden.

11. Verfahren nach Anspruch 10, **dadurch gekennzeichnet, dass** in dem magnetischen Abscheider (48) mit permanentmagnetischen magnetfelderzeugenden Mitteln ein zum Abscheiden von Partikeln dienendes Magnetfeld erzeugt wird.

12. Verfahren nach Anspruch 10 oder 11, **dadurch gekennzeichnet, dass** ein Zustand des Lagers (6, 14) überwacht wird, indem ein Zustand des Schmierfetts (34), insbesondere im Hinblick auf eine Anzahl von in dem Schmierfett (34) vorhandenen Partikeln, überwacht wird.

13. Verfahren nach einem der Ansprüche 10 bis 12, **dadurch gekennzeichnet, dass** ein Direktschmiersystem in den geschlossenen Schmierfettkreislauf integriert ist, wobei das Direktschmiersystem eine Schmierfetteinbringvorrichtung mit einer Austrittsöffnung umfasst und durch diese Austrittsöffnung Schmierfett (34) direkt auf eine Laufbahn des Lagers (6, 14) aufgebracht wird.

## Claims

1. A lubricating grease supply device (30) of a wind energy installation (1), which comprises a lubricating grease conveying device (32) and a lubricating grease cleaning device (46), wherein the lubricating grease conveying device (32) is set up to convey lubricating grease (34) in a direction of conveyance (36) in a closed circuit for lubricating grease, wherein a bearing (6, 14) of the wind energy installation (1), which bearing (6, 14) is to be lubricated, and the lubricating grease cleaning device (46) each form a section of the closed circuit for lubricating grease, **characterised in that** the lubricating grease cleaning device (46) comprises a magnetic separator (48) and at least one gravity separator (50, 52).

2. The lubricating grease supply device (30) according to claim 1, **characterised in that** the magnetic separator (48) and at least one gravity separator (50) are accommodated in a common filter insert (64), wherein the filter insert (64) is constructed as an exchangeable module.

3. The lubricating grease supply device (30) according to claim 1 or 2, **characterised in that** a first (50) and a second gravity separator (52) are provided, which are arranged in series in the closed circuit for lubricating grease.

4. The lubricating grease supply device (30) according to any one of the claims 1 to 3, **characterised in that** the magnetic separator comprises permanent magnetic means for generating a magnetic field, in particular wherein the means for generating a magnetic field are rods (54) which are aligned at least approximately in a direction which is perpendicular with respect to the direction of conveyance (36) of the lubricating grease.

5. The lubricating grease supply device (30) according to any one of the claims 1 to 4, **characterised in that** a lubricating grease monitoring device (72) for monitoring a condition of the bearing (6, 14) to be lubricated is included in the closed circuit for lubricating grease.

6. The lubricating grease supply device (30) according to any one of the claims 1 to 5, **characterised in that** a plurality of bearings of the wind energy installation (1) are integrated into the circuit for lubricating grease.

7. The lubricating grease supply device (30) according to any one of the claims 1 to 6, **characterised in that** a direct lubrication system is integrated into the closed circuit for lubricating grease, wherein the direct lubrication system comprises a lubricating grease introduction device with an outlet opening which is oriented against a raceway of the bearing (6, 14).

8. A wind energy installation (1) which comprises at least one bearing (6, 14) which is lubricated with lubricating grease (34), **characterised by** a lubricating grease supply device (30) according to any one of the claims 1 to 7.

9. Use of a lubricating grease supply device (30) according to any one of the claims 1 to 7 in a wind energy installation (1) comprising at least one bearing (6, 14) which is lubricated with lubricating grease (34).

10. A method of lubricating a bearing (6, 14) of a wind energy installation (1) with lubricating grease (34), wherein the lubricating grease (34) is conveyed in a direction of conveyance (36) in a closed circuit for lubricating grease, wherein the bearing (6, 14) of the wind energy installation (1), which bearing (6, 14) is to be lubricated, and a lubricating grease cleaning device (46) each form a section of the closed circuit for lubricating grease, **characterised in that** particles which are present in the lubricating grease (34) are removed in the lubricating grease cleaning device (46) by means of a magnetic separator (48) and at least one gravity separator (50, 52).

11. The method according to claim 10, **characterised in that** a magnetic field which serves to remove particles is generated in the magnetic separator (48) with permanent magnetic means for generating a magnetic field.

12. The method according to claim 10 or 11, **characterised in that** a condition of the bearing (6, 14) is monitored by monitoring a condition of the lubricating grease (34), in particular with respect to a number of particles which are present in the lubricating grease (34).

13. The method according to any one of the claims 10 to 12, **characterised in that** a direct lubrication system is integrated into the closed circuit for lubricating grease, wherein the direct lubrication system comprises a lubricating grease introduction device with an outlet opening, and that lubricating grease (34) is applied directly to a raceway of the bearing (6, 14) through this outlet opening.

## Revendications

1. Dispositif d'alimentation en graisse de lubrification (30) d'une éolienne (1), avec un dispositif de convoyage de graisse de lubrification (32) et un dispositif de nettoyage de graisse de lubrification (46), dans lequel le dispositif de convoyage de graisse de lubrification (32) est mis au point pour convoyer de la graisse de lubrification (34) dans une direction de convoyage (36) dans un circuit de graisse de lubrification fermé, dans lequel un palier (6, 14) à lubrifier de l'éolienne (1) et le dispositif de nettoyage de graisse de lubrification (46) forment respectivement un tronçon du circuit de graisse de lubrification fermé, **caractérisé en ce que** le dispositif de nettoyage de graisse de lubrification (46) présente un séparateur magnétique (48) et au moins un séparateur par gravité (50, 52).

2. Dispositif d'alimentation en graisse de lubrification (30) selon la revendication 1, **caractérisé en ce que** le séparateur magnétique (48) et au moins un séparateur par gravité (50) sont logés dans un insert filtrant (64) commun, dans lequel l'insert filtrant (64) est réalisé en tant que module interchangeable.

3. Dispositif d'alimentation en graisse de lubrification (30) selon la revendication 1 ou 2, **caractérisé en ce qu'**un premier (50) et un deuxième séparateur par gravité (52) sont présents, qui sont disposés de manière à se suivre l'un l'autre dans le circuit de graisse de lubrification fermé.

4. Dispositif d'alimentation en graisse de lubrification (30) selon l'une quelconque des revendications 1 à 3, **caractérisé en ce que** le séparateur magnétique comprend des moyens à aimants permanents générateurs de champs magnétiques, dans lequel en particulier les moyens générateurs de champs magnétiques sont des barres (54) orientées au moins approximativement de manière perpendiculaire par rapport à la direction de convoyage de graisse de lubrification (36).

5. Dispositif d'alimentation en graisse de lubrification (30) selon l'une quelconque des revendications 1 à 4, **caractérisé en ce qu'**un dispositif de surveillance de graisse de lubrification (72) servant à surveiller un état du palier (6, 14) à lubrifier est compris par le circuit de graisse de lubrification fermé.

6. Dispositif d'alimentation en graisse de lubrification (30) selon l'une quelconque des revendications 1 à 5, **caractérisé en ce que** plusieurs paliers de l'éolienne (1) sont intégrés dans le circuit de graisse de lubrification.

7. Dispositif d'alimentation en graisse de lubrification (30) selon l'une quelconque des revendications 1 à 6, **caractérisé en ce qu'**un système de lubrification directe est intégré dans le circuit de graisse de lubrification fermé, dans lequel le système de lubrification directe comprend un dispositif d'introduction de graisse de lubrification avec une ouverture de sortie, qui est orientée dans le sens opposé à une voie de roulement du palier (6, 14).

8. Éolienne (1) avec au moins un palier (6, 14) lubrifié avec de la graisse de lubrification (34), **caractérisée par** un dispositif d'alimentation en graisse de lubrification (30) selon l'une quelconque des revendications 1 à 7.

9. Utilisation d'un dispositif d'alimentation en graisse de lubrification (30) selon l'une quelconque des revendications 1 à 7 dans une éolienne (1) avec au moins un palier (6, 14) lubrifié avec de la graisse de lubrification (34).

10. Procédé de lubrification d'un palier (6, 14) d'une éolienne (1) avec de la graisse de lubrification (34), dans lequel la graisse de lubrification (34) est convoyée dans une direction de convoyage (36) dans un circuit de graisse de lubrification fermé, dans lequel le palier (6, 14) à lubrifier de l'éolienne (1) et un dispositif de nettoyage de graisse de lubrification (46) forment respectivement un tronçon du circuit de graisse de lubrification fermé, **caractérisé en ce que** des particules présentes dans la graisse de lubrification (34) sont séparées dans le dispositif de nettoyage de graisse de lubrification (46) avec un séparateur magnétique (48) et avec au moins un séparateur par gravité (50, 52).

11. Procédé selon la revendication 10, **caractérisé en ce qu'**un champ magnétique servant à séparer des particules est généré dans le séparateur magnétique (48) avec des moyens à aimants permanents générateurs de champs magnétiques.

12. Procédé selon la revendication 10 ou 11, **caractérisé en ce qu'**un état du palier (6, 14) est surveillé **en ce qu'**un état de la graisse de lubrification (34) est surveillé en particulier en termes d'un nombre de particules présentes dans la graisse de lubrification (34).

13. Procédé selon l'une quelconque des revendications 10 à 12, **caractérisé en ce qu'**un système de lubrification directe est intégré dans le circuit de graisse de lubrification fermé, dans lequel le système de lubrification directe comprend un dispositif d'introduction de graisse de lubrification avec une ouverture de sortie et de la graisse de lubrification (34) est appliquée directement sur une voie de roulement du palier (6, 14) par ladite ouverture de sortie.
